# EUROPEAN PATENT APPLICATION

(11) **EP 1 477 689 A2**
(43) Date of publication of application: **17.11.2004**
(21) Application number: 04252693.9
(22) Date of filing: 08.05.2004
(51) Int. Cl.: F16B 41/00, F16B 31/02, F16B 23/00, B25B 13/48

(54) **One way threaded security fastener and installation tool**

(30) Priority: 13.05.2003 GB 0310921
(71) Applicant: Such, Simon, Little Witley, Worcestershire WR6 6LQ (GB)
(72) Inventor: Such, Simon, Little Witley, Worcestershire WR6 6LQ (GB)
(74) Representative: Harman, Michael Godfrey

(57) **Abstract**

A one way threaded security fastener comprises a head (2, 64) with a socket (3) containing one or more deformable or detachable torque transfer elements (5, 60) which engage a tool (Fig.3, Fig.7, Fig.8) such as a screwdriver during installation and deform or shear off at a predetermined torque leaving the socket with a generally smooth inner wall (6, 62). Preferably the socket (3) is at least partially frustoconical or hemispheroidal with a circular cross section. The torque transfer elements (5, 60) may be made from metal or plastics material, and may be integral with the fastener or may be attached to the socket (3) by glue or the like. An installation tool (Fig.3, Fig.7, Fig.8) is disclosed for use with the fastener.

## Description

This invention relates to threaded fasteners such as screws and the like, and in particular to one way security fasteners which resist removal after they are installed.

Threaded fasteners include woodscrews, machine screws, capscrews, grub screws, bolts and the like, and comprise a threaded stem, which in use is screwed into the corresponding workpiece, nut or threaded hole, and a head which is engaged by a tool for transferring torque to the fastener during installation and removal. The head is usually protruberant, but in the case of grub screws and the like may merely comprise an end portion of the stem.

Threaded security fasteners are often used where threaded fasteners such as screws or bolts might be at risk of removal by unauthorised persons after they have been installed. One way of preventing unauthorised removal is to provide the head with a socket which offers small and intricate surfaces, so that a specially adapted tool is required to engage it. However, it is difficult to prevent such tools from falling into the hands of unauthorised persons.

Where it is not intended to remove the fastener after installation, a one way security fastener may be preferred, by which is meant a fastener which is designed to prevent the application of a sufficient torque to effect its removal after installation. Some one way security fasteners may be installed by conventional tools; for example, a slot head woodscrew may be equipped with ramped surfaces in the reverse direction so that the slot transfers torque from a conventional flat bladed screwdriver in the forward or installation direction, but causes the blade of the screwdriver to "cam out" in the reverse direction. However, it remains possible to transfer a small amount of torque to the ramped surfaces by exerting a heavy axial pressure against the head of the screw. Such fasteners also suffer from the disadvantage that they cannot easily be rotated in the reverse direction during installation, for example, where the fastener encounters an obstruction and needs to be removed again after partial insertion into the workpiece.

An alternative type of one way security fastener comprises a screw or bolt having an outer head which is provided with a circumferential groove or recess, forming a waist around the fastener at which the head shears off after installation at a predetermined torque, leaving a flat or smoothly curved surface which it is difficult to grip. The outer head may comprise for example a hexagonal external profile or a hexagonal socket for engagement respectively by a spanner or a hexagonal key. One popular pattern comprises a hexagonal outer head which is engaged by a spanner to insert the fastener and shears off at a predetermined torque leaving a frustoconical inner head which is very difficult to engage with a tool. However, in fasteners of this type the outer head necessarily comprises a significant proportion of the volume and hence the cost of the total fastener, which material is wasted after installation; furthermore, the special profile is relatively costly to manufacture. The added bulk of the outer head may also make it difficult to instal the fastener in a confined space. Moreover, such fasteners often leave an undesirable sharp protruding edge after removal of the outer head.

It is the aim of the present invention to provide an improved one way threaded security fastener. It is a further object to provide a tool for installing the fastener.

According to the present invention there is provided a security fastener for use with an installation tool, the fastener comprising a threaded stem and a head, the head having a socket for receiving the tool; characterised in that the socket is provided with at least one torque transfer element for transferring torque from the tool to the fastener, wherein the at least one torque transfer element is deformable or detachable from the socket such that it deforms or detaches from the socket at a predetermined torque, such that after deformation or detachment of the torque transfer element the tool can no longer transfer torque to the fastener.

Various illustrative embodiments, which are not intended to limit the scope of the invention, will now be described by way of example and with reference to the accompanying drawings, in which:
Fig. 1 is a side view of a first fastener according to a first embodiment;
Fig. 2 is a plan view of the head of the first fastener of Fig. 1;
Fig. 3 is a side view of an installation tool for use with the first fastener;
Fig. 4 is a perspective view of the tool and fastener prior to use;
Fig. 5 is a plan view of the head of Fig. 2 after installation of the fastener and detachment of the torque transfer element;
Fig. 6 shows a second fastener according to a second embodiment;
Fig. 7 shows an installation tool adapted for engagement with the socket of the second fastener of Fig. 6; and
Fig. 8 shows an alternative installation tool for use with the second fastener.

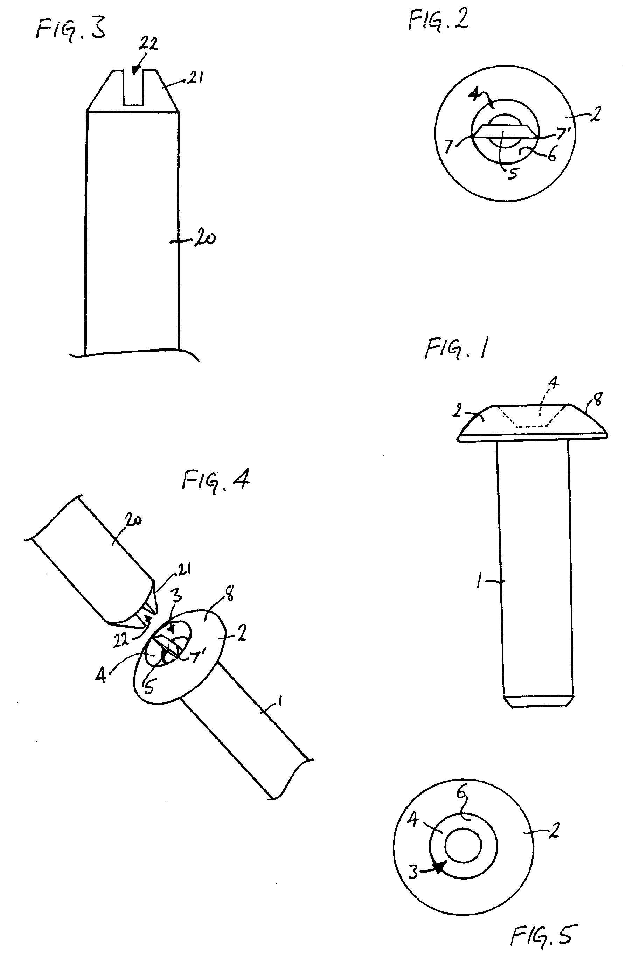

Referring to Figures 1 - 5, in a first embodiment a one way threaded security fastener comprises a threaded stem 1 (the threads are not illustrated) with a domed or raised head 2 formed at one end. The head has a socket 3 which comprises a shallow, partially conical or frustoconical recess 4 which in use receives the tip 21 of the tool 20 so as to transfer torque from the tool to the fastener and drive the threaded stem 1 into the workpiece or nut. The stem may be screw threaded for installation into a threaded socket or nut, or may be formed from hardened steel or the like as a self tapping screw; alternatively it may be formed for example as a woodscrew or the like. Depending on its application the fastener may be formed from metal, polymers, or other materials; for some applications, cold forging from stainless steel is particularly preferred.

It will be appreciated that other forms of head, such as countersunk, pan, round or other head configurations may equally be employed. Alternatively the fastener may be formed as a grub screw or the like with a head which has the same circumference as the stem. Preferably however the head 2 is formed with a rounded upper external surface 8 as shown, or alternatively is formed so that it can be recessed below the surface of the workpiece (for example as a countersunk head or a grub screw). This prevents it from being gripped at its external surface so as to remove it after installation. The thread may also be formed as a threaded bore inside the stem rather than on the outside.

The socket 3 is provided with a detachable internal torque transfer element comprising a web 5 which bisects the recess 4; during installation the web 5 is engaged in the channel 22 in the tip 21 of the tool 20, which is used to transfer torque to the fastener and drive it into the workpiece. The web preferably engages the circumferential wall 6 of the recess at its two edges 7, 7', which advantageously are formed as shown with tapering sections so that they are narrowest at the point where they join the circumferential wall.

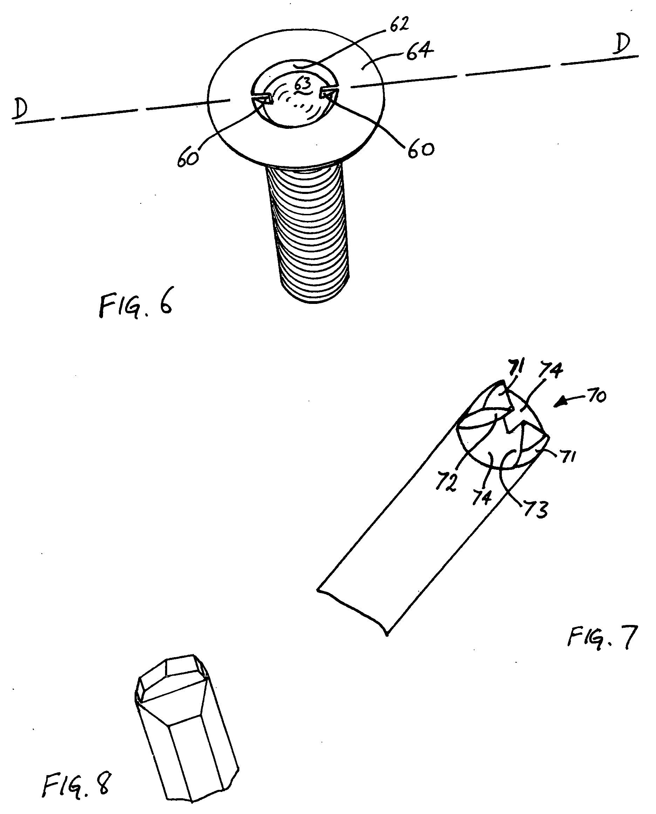

Once the fastener has been driven fully home, the increased resistance of the fully engaged thread allows increased torque to be applied via the tool 20 to the web 5. When the torque reaches a predetermined value it causes the web 5 to shear away from the circumferential wall of the socket by detaching from the recess at its weak edges 7, 7', leaving the recess 4 as shown in Fig. 5 with a generally smooth circumferential wall 6. The remaining small fragments of the web 5 are insufficient to enable the tool 20 to transmit sufficient torque to remove the fastener, which is left embedded in the workpiece.

For some applications in moderately dimensioned fasteners the web 5 is arranged to shear off at a value of approximately 7 to 11 pound feet of torque, although other values may of course be preferred depending on the application and the shape and size of the fastener and the torque transfer element or elements. The value of the predetermined torque is selected inter alia to reflect the size and type of fastener and its likely field of use so as to be at least sufficient to enable the fastener to be fully inserted before detachment or deformation occurs.

It will be appreciated that the recess 4 might be formed with a noncircular cross section; however, a smooth and circular cross section as shown makes it more difficult to engage it with the installation tool or another tool so as to transmit torque to the fastener after detachment of the torque transfer element 5, and is therefore preferred.

The longitudinal section of the socket 3 may advantageously be formed as a wholly or partially conical or frustoconical section as shown in Figures 2, 4 and 5, and as a dotted line in Fig. 1, tapering towards the bottom of the socket. Alternatively the sides of the longitudinal section may be parallel or curved, so that the interior of the socket 3 is cylindrical or partially or completely hemispherical or hemispheroidal so that the circumferential wall 6 converges towards the centre of the bottom of the socket. All of these alternatives exhibit a circular internal cross section and are hence difficult to grip with a rotating tool after removal of the torque transfer element. A conical or frustoconical or a fully or partially hemispheroidal or hemispherical socket however enjoys the additional advantage that it is still more difficult to engage it by jamming a tool into it, and is therefore preferred over a cylindrical socket.

In alternative embodiments two or more detachable or deformable torque transfer elements are provided, which as with the first embodiment may engage the interior wall of the socket at their weakest points so that when the predetermined torque is exceeded the elements break off from the wall of the socket leaving it generally smooth or with negligible remaining fragments which are insufficient to provide an engaging surface to enable removal of the fastener.

In the embodiment shown in Figures 1 - 5, the tool 20 is specially adapted to engage the fastener. It will be appreciated however that the torque transfer element or elements may alternatively be arranged so as to be engaged by an installation tool of a conventional type, such as a cross head or flat bladed screwdriver. For example, four frangible elements may be evenly arranged around the inner circumference of the socket so that each element extends from top to bottom of the socket. The inner surface of each element may be adapted to engage the head of a cross head or flat bladed screwdriver; each element then shears off from the circumferential wall of the socket when the screwdriver applies the predetermined torque. Similarly, two torque transfer elements might be arranged to engage the tip of a flat bladed screwdriver.

In the abovedescribed embodiments the deformable or detachable torque transfer element or elements are attached to the circumferential wall of the socket at one or more points. Alternatively or additionally however the torque transfer element or elements may be attached to the base of the socket.

Referring to Fig. 6, a second embodiment provides two detachable internal torque transfer elements 60, arranged so that they project inwardly on the circumferential wall 62 of the shallow socket along a diameter D of the socket. A specially adapted tool, which may be similar for example to that shown in Fig. 3, is conveniently used to drive the fastener home, whereupon one or both of the elements 60 detach from the socket by shearing away from its frustoconical circumferential wall 62 and shallow conical base 63 once the predetermined torque is reached, leaving a generally smooth socket which widens outwardly from its base and offers no internal surfaces which may be engaged by a tool for removing the fastener.

Since in use the tool bit is retained in position by the socket, any substantial misalignment of the tool will tend to disengage the tool from the torque transfer elements, avoiding the risk of inadvertently damaging the torque transfer elements by allowing the tool to slip during installation. The tool bit may advantageously be relatively large compared with the torque transfer elements, which advantageously engage the tool bit in the region of its outer periphery; this avoids the need for small projecting engagement surfaces on the tool and hence helps to avoid damage to the tool during installation.

Desirably, the torque transfer elements 60 are small in relation to the size of the fastener, and are economically and simply formed integrally with the fastener, for example by cold forging from stainless steel or other suitable material, so that they form the weakest part of the fastener and therefore substantially detach from the socket at the point where they join its wall 62 and base 63 when the predetermined torque is applied. The upper surface 64 of the head offers a low, rounded profile which, like the socket, resists engagement by a tool after the fastener is installed.

Alternatively or additionally, the torque transfer elements may be arranged to deform by disintegrating, tearing, collapsing or buckling on installation of the fastener when the predetermined torque is applied, rather than by shearing away cleanly from the socket; in either case, the deformation or detachment of the torque transfer elements ensures that the fastener can no longer be effectively engaged by the tool so as to transfer sufficient torque to remove it. The torque transfer elements may alternatively be offset on either side of a diameter so as to assist the user to insert the fastener by means of an installation tool such as a conventional flat bladed screwdriver inserted between the two elements.

In alternative embodiments the torque transfer elements may be made from plastics material, and where the fastener is made from plastics material then the torque transfer elements may again be integral. Alternatively each torque transfer element may be individually attached by gluing, heat welding or the like means to the wall of the socket so that the bond releases the element at the predetermined torque; alternatively a plurality of torque transfer elements may be formed as a unit, for example from moulded plastics material, and the unit inserted into the generally smooth socket and attached, for example with glue or by means of heat welding, so as to detach when the predetermined torque is reached. In a still further alternative embodiment, a brittle plastics unit including one or more tool-engaging surfaces is fixed in the socket, for example by means of glue, or alternatively is moulded into the socket, and fractures into two or many pieces when the installation tool applies the predetermined torque.

The torque transfer element or elements may also be made frangible or detachable by hardening or the like, or merely by their small size in relation to the size of the fastener, which ensures that they will break or collapse at the predetermined torque. It is to be understood that deformation or detachment may include shearing away, disintegration or fracturing, or buckling or collapse of the torque transfer element, such that in each case the element no longer functions to transfer torque from a tool to the fastener, at least in the reverse or removal direction. Deformation or detachment of the torque transfer element may take place in the insertion direction as described above, or alternatively may occur only when torque is applied in the reverse or removal direction, for example, where the fastener is designed so as to require greater torque in the removal direction than in the insertion direction, so that the torque transfer elements need not necessarily disintegrate until an attempt is made to remove the fastener.

The present fastener enjoys the advantage that the material cost of the small detachable element or elements is negligible in comparison with the cost of the fastener as a whole. The head of the fastener may also be advantageously compact and hence more suitable for installation in confined spaces, while its profile (which does not require a circumferential groove or recess) makes it easier and cheaper to manufacture than those prior art fasteners whose head is arranged to shear off at a predetermined torque. The present fastener also leaves an overall smooth outer profile after detachment of the torque transfer elements, making it suitable for use in situations where the sharp or jagged profile of the prior art fastener might result in bodily injury. The present fastener also enjoys the advantage over those known one way fasteners having ramped tool engaging surfaces or the like, that it may be rotated during installation in both the forward and reverse directions; thus the novel fastener may be removed if necessary after partial installation and before the predetermined torque is reached.

Referring to Fig. 7, the tip 70 of an installation tool specifically adapted for the second fastener is illustrated, which conforms to the internal profile of the socket of the fastener of Fig. 6 so that its projecting elements 71 engage the torque transfer elements 60 for installation of the fastener. Each projecting element 71 has a driving surface 72 for insertion of the fastener, and a reverse surface 73 which engages the torque transfer elements 60 in the reverse direction so that the fastener can be removed if required during installation and before the predetermined torque is applied by the driving surfaces. Where the fastener has a left hand thread, the functions of the driving and reverse surfaces are of course reversed. The large cutouts 74 between the projecting elements 71 allow the tool to be inserted easily into the socket of the fastener and then rotated to bring the surfaces 72 or 73 into engagement with the torque transfer elements 60. Alternative profiles may of course be adopted.

The tip of an alternative but less preferred installation tool, which is also suitable for the installation and removal (before detachment of the torque transfer elements) of the second fastener, is shown in Fig. 8.

In summary, in embodiments of the invention a one way threaded security fastener comprises a head with a socket containing one or more deformable or detachable torque transfer elements which engage a tool such as a screwdriver during installation and deform or shear off at a predetermined torque leaving the socket with a generally smooth inner wall. Preferably the socket is at least partially frustoconical or hemispheroidal with a circular cross section. The torque transfer elements may be made from metal or plastics material, and may be integral with the fastener or may be attached to the socket by glue or the like.

It is to be understood that the abovedescribed embodiments are illustrative rather than limiting, and many further adaptations of the invention may be made within the scope of the appended claims.

## Claims

1. A security fastener for use with an installation tool (Fig.3, Fig. 7, Fig.8),
the fastener comprising a threaded stem (1) and a head (2, 64), the head having a socket (3) for receiving the tool;
**characterised in that** the socket is provided with at least one torque transfer element (5, 60) for transferring torque from the tool to the fastener, wherein the at least one torque transfer element is deformable or detachable from the socket such that it deforms or detaches from the socket at a predetermined torque,
such that after deformation or detachment of the torque transfer element the tool can no longer transfer torque to the fastener.

2. A security fastener according to claim 1, **characterised in that** the socket comprises a recess (4) having a circumferential wall (6, 62) and a circular cross section,
and the at least one torque transfer element engages the circumferential wall.

3. A security fastener according to claim 2, **characterised in that** the torque transfer element comprises a web (5) which bisects the recess.

4. A security fastener according to claim 2, **characterised in that** the fastener includes at least two torque transfer elements (60) arranged on the circumferential wall of the recess.

5. A security fastener according to any of claims 2 - 4, **characterised in that** the recess is at least partially conical or frustoconical.

6. A security fastener according to any of claims 2 - 4, **characterised in that** the recess is at least partially hemispherical or hemispheroidal.

7. A security fastener according to any preceding claim, **characterised in that** the torque transfer element is formed integrally with the fastener.

8. A security fastener according to any preceding claim, **characterised in that** the torque transfer element is formed from plastics material.

9. An installation tool (Fig.3, Fig.7, Fig.8) for installation of a security fastener according to any preceding claim,
wherein the tool has a tip adapted to engage the at least one torque transfer element so as to transfer torque to insert the fastener
and to deform the at least one torque transfer element or to detach it from the socket when the predetermined torque is reached.

10. An installation tool according to claim 9,
**characterised in that** the tip of the tool is adapted to engage the at least one torque transfer element so as to remove the fastener during installation and before the predetermined torque is applied.
